(19) Europäisches Patentamt
European Patent Office
Office européen des brevets

(11) EP 3 408 798 B1

(12) EUROPEAN PATENT SPECIFICATION

(45) Date of publication and mention of the grant of the patent:
15.07.2020 Bulletin 2020/29

(21) Application number: 16822661.1

(22) Date of filing: 19.12.2016

(51) Int Cl.:
G06N 3/04 (2006.01)     G06K 9/00 (2006.01)
G06N 3/08 (2006.01)     G06K 9/46 (2006.01)
G06N 3/063 (2006.01)

(86) International application number:
PCT/EP2016/081776

(87) International publication number:
WO 2017/129325 (03.08.2017 Gazette 2017/31)

(54) A CONVOLUTIONAL NEURAL NETWORK

EIN KONVOLUTIONELLES NEURONALES NETZWERK

UN RESEAU NEURONAL CONVOLUTIONNEL

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 29.01.2016 US 201615010418
11.08.2016 US 201615234851
17.10.2016 US 201615295846

(43) Date of publication of application:
05.12.2018 Bulletin 2018/49

(73) Proprietor: FotoNation Limited
Ballybrit, Galway Co. H91 R2E9 (IE)

(72) Inventors:
• BIGIOI, Petronel
  Galway H91 XAK2 (IE)
• MUNTEANU, Mihai Constantin
  R-500133 Brasov (RO)
• CALIMAN, Alexandru
  R-500133 Brasov (RO)
• ZAHARIA, Corneliu
  500152 Brasov (RO)
• DINU, Dragos
  R-500133 Brasov (RO)

(74) Representative: Hanna Moore + Curley
Garryard House
25/26 Earlsfort Terrace
Dublin 2, D02 PX51 (IE)

(56) References cited:
US-A- 6 157 751          US-A- 6 157 751
US-A1- 2016 292 566      US-A1- 2016 292 566

• DIAS F M ET AL: "Artificial neural networks: a review of commercial hardware", ENGINEERING APPLICATIONS OF ARTIFICIAL INTELLIGENCE, PINERIDGE PRESS, SWANSEA, GB, vol. 17, no. 8, 1 December 2004 (2004-12-01), pages 945-952, XP004656068, ISSN: 0952-1976, DOI: 10.1016/J.ENGAPPAI.2004.08.011
• PORRMANN M ET AL: "Implementation of artificial neural networks on a reconfigurable hardware accelerator", PARALLEL, DISTRIBUTED AND NETWORK-BASED PROCESSING, 2002. PROCEEDINGS. 10TH EUROMICRO WORKSHOP ON CANARY ISLANDS, SPAIN 9-11 JAN. 2002, LOS ALAMITOS, CA, USA,IEEE COMPUT. SOC, US, 9 January 2002 (2002-01-09), pages 243-250, XP010587926, DOI: 10.1109/EMPDP.2002.994279 ISBN: 978-0-7695-1444-4
• ANTONY W SAVICH ET AL: "The Impact of Arithmetic Representation on Implementing MLP-BP on FPGAs: A Study", IEEE TRANSACTIONS ON NEURAL NETWORKS, IEEE SERVICE CENTER, PISCATAWAY, NJ, US, vol. 18, no. 1, 1 January 2007 (2007-01-01), pages 240-252, XP011152917, ISSN: 1045-9227, DOI: 10.1109/TNN.2006.883002

**Description**

**Field**

The present invention relates to a convolutional neural network engine with an improved image cache.

**Background**

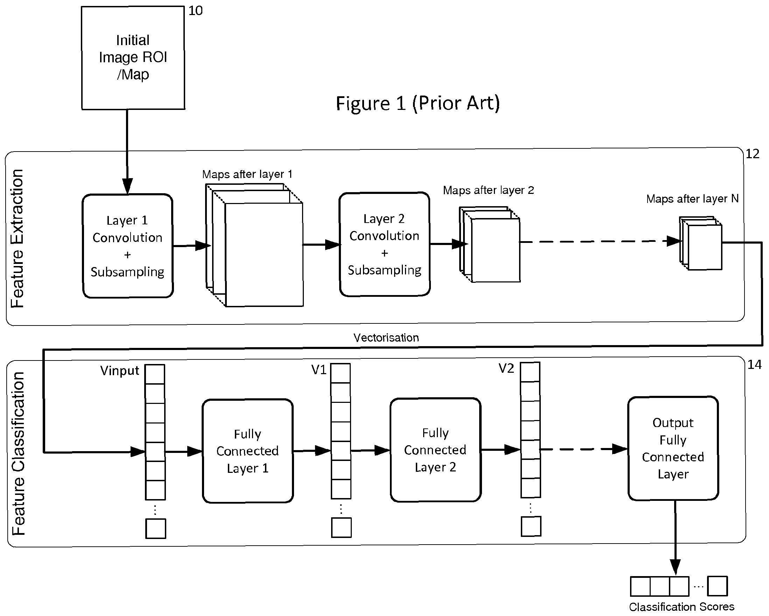

A processing flow for typical Convolutional Neural Network (CNN) is presented in Figure 1. Typically, the input to the CNN is at least one 2D image/map 10 corresponding to a region of interest (ROI) from an image. The image/map(s) can comprise image intensity values only, for example, the Y plane from a YCC image; or the image/map(s) can comprise any combination of colour planes from an image; or alternatively or in addition, the image/map(s) can contain values derived from the image such as a Histogram of Gradients (HOG) map as described in PCT Application No. PCT/EP2015/073058 (Ref: FN-398) or an Integral Image map.

CNN processing comprises two stages:

  ◦ Feature Extraction (12) - the convolutional part; and
  ◦ Feature classification (14).

CNN feature extraction 12 typically comprises a number of processing layers 1...N, where:

• Each layer comprises a convolution followed by optional subsampling;
• Each layer produces one or (typically) more maps (sometimes referred to as channels);
• The size of the maps after each convolution layer is typically reduced by subsampling (examples of which are pooling or max-pooling);
• A first convolution layer typically performs 2D convolution of an original 2D image/map to produce its output maps, while subsequent convolution layers perform 3D convolution using the output maps produced by the previous layer as inputs. Nonetheless, if the input comprises say a number of maps previously derived from an image; or multiple color planes, for example, RGB or YCC for an image; or multiple versions of an image, then the first convolution layer can operate in exactly the same way as successive layers, performing a 3D convolution on the input images/maps.

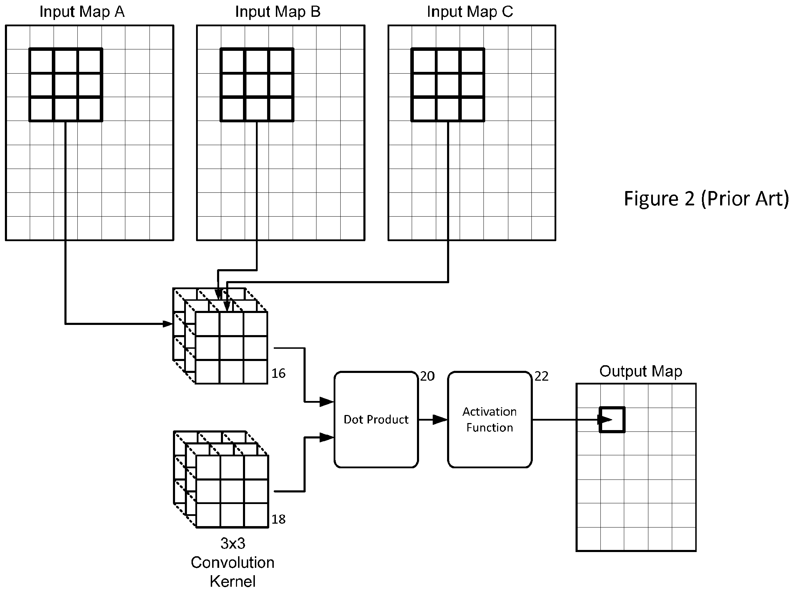

Figure 2 shows an example 3D convolution with a 3x3x3 kernel performed by a subsequent feature extraction convolution layer of Figure 1. The 3x3x3 means that three input maps A, B, C are used and so, a 3x3 block of pixels from each input map is needed in order to calculate one pixel within an output map.

A convolution kernel also has 3x3x3=27 values or weights pre-calculated during a training phase of the CNN. The cube 16 of input map pixel values is combined with the convolution kernel values 18 using a dot product function 20. After the dot product is calculated, an activation function 22 is applied to provide the output pixel value. The activation function 22 can comprise a simple division, as normally done for convolution, or a more complex function such as sigmoid function or a rectified linear unit (ReLU) activation function of the form: $z_j = h(a_j) = \max(0, a_j)$ as typically used in neural networks.

In this case, for 2D convolution, where a single input image/map is being used, the input image/map would be scanned with a 3x3 kernel to produce the pixels of a corresponding output map.

Referring back to Figure 1, the layers involved in CNN feature classification 14 are typically as follows:

• The maps produced by the last convolutional layer are concatenated in a single vector (Vinput);
• Vinput is the input to a multi-layer fully connected network comprising a sequence of fully connected network layers, each processing a vector input and providing a vector output;
• The output of the fully connected network comprises a vector of classification scores or a feature vector representative of the input image/map(s) in accordance with the CNN training.

The CNN is trained to classify the input ROI into one or more classes or to detect an object with an image. For example, for a ROI potentially containing a face, a CNN might be used to determine if the face belongs to an adult or a child; if the face is smiling, blinking or frowning. For ROI potentially containing a body, the CNN might be used to determine a pose for the body.

Once the structure of the CNN is determined, i.e. the input maps, the number of convolution layers; the number of output maps; the size of the convolution kernels; the degree of sub-sampling; the number of fully connected layers; and the extent of their vectors - the weights to be used within the convolution layer kernels and the fully connected layers used for feature classification are determined by training against a sample data set containing positive and negative labelled instances of a given class, for example, faces labelled as smiling and regions of interest containing non-smiling faces. Suitable platforms for facilitating the training of a CNN are available from: PyLearn which is based on Theanoand MatConvNet which is in turn based on Caffe; Thorch; or TensorFlow. It will nonetheless be appreciated that the structure chosen for training may need to be iteratively adjusted to optimize the classification provided by the CNN.

In any case, it would be useful to incorporate a CNN engine within an image processing system so that feature classification might be performed on the fly as images are acquired or at least soon afterwards. For example, a CNN might be incorporated within an image acquisition system such as described in US Provisional Application No. 62/210,243 filed 26 August 2015 (Ref: FN-469), PCT Application WO2014/005783 (Ref: FN-384) and US2015/262344 (Ref: FN-384-CIP).

However, in order to do so, the responsiveness and memory requirements for the CNN need to be rationalized.

US 6157751 discloses accessing image pixel data in a plurality of parallel random access memories (RAMs) by providing the RAMs so that they are arranged in pairs that each include an even RAM and an odd RAM. Each of the pairs includes an identical copy of the image pixel data stored at identical addresses in each of the RAMs relative to each other. An image processor receives image pixel data from the RAMs over multi-bit data lines and addresses rows and columns of the pairs so that alternating columns of image pixel data corresponding to alternating pixel columns in an acquired image are stored in an alternating manner in each of an even RAM and an odd RAM. In other words, pixel data of alternating odd pixel columns are stored in succeeding columns in the odd RAM and pixel data of all even pixel columns are stored in succeeding columns in the even RAM.

## Summary

According to a first aspect, there is provided a convolutional neural network engine for an image processing system according to claim 1.

Embodiments of this aspect of the invention provide a CNN engine readily incorporated within an image processing system and where the CNN engine can be programmably configured to operate with varying feature extracting convolutional layers as well as feature classification layers. The CNN engine includes an image cache with a pipelined architecture able to rapidly provide input map information to a convolution engine so that a 3D convolution involving a given number of input maps can be performed in a minimum number of clock cycles.

## Brief Description of the Drawings

Embodiments of the invention will now be described, by way of example, with reference to the accompanying drawings, in which:

Figure 1 shows a typical Convolutional Neural Network (CNN);

Figure 2 shows an exemplary 3D Convolution with a 3x3x3 kernel;

Figure 3 is a block diagram of a CNN according to an embodiment of the present invention;

Figure 4 illustrates an exemplary memory organization of images and maps within the image cache of Figure 3;

Figure 5 illustrates an exemplary memory organization for a specific image/map within the image cache of Figure 3;

Figure 6 shows the internal structure of the image cache of Figure 3;

Figure 7 illustrates the incorporation of flash memory storing network configuration information within a CNN according to a further embodiment of the present invention;

Figure 8 illustrates a redundant connection scheme between the flash memory of Figure 7 and the remainder of the CNN;

Figure 9 illustrates the incorporation of a double-buffered image cache within a CNN according to a still further embodiment of the present invention; and

Figure 10 shows schematically a bit architecture for a single transistor memory cell employed in some embodiments of the invention.

## Detailed Description

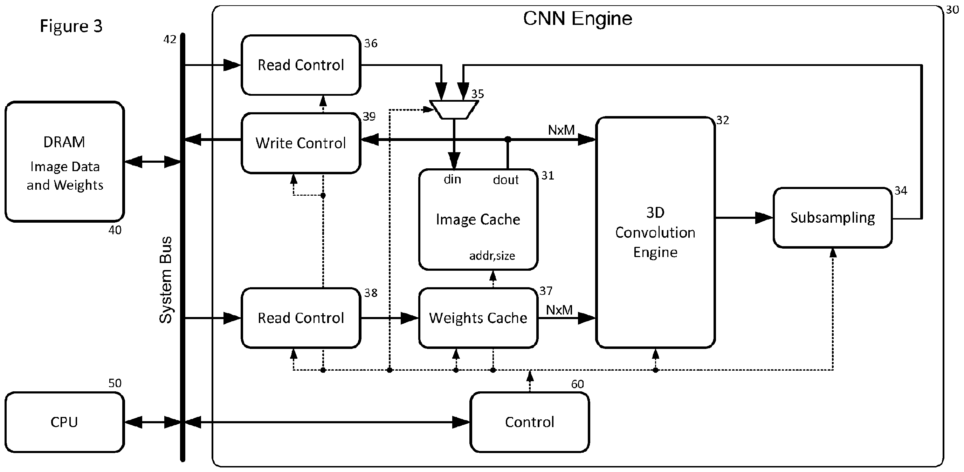

Figure 3 shows a block diagram of a CNN Engine 30 implemented according to an embodiment of the present invention within an image acquisition system. The CNN Engine 30 connects to a system bus 42 and can access main (DRAM) memory 40 into which images acquired by the system are written. Image acquisition pipelines which obtain and possibly pre-process images before or after they are written to DRAM 40 are well known and are not described in detail here, but examples of such systems are described in US Provisional Application No. 62/210,243 filed 26 August 2015 (Ref: FN-469), PCT Application WO2014/005783 (Ref: FN-384) and US2015/262344 (Ref: FN-384-CIP) referred to above.

An application (not shown) being executed by a system CPU 50 can therefore signal to a controller 60 within the CNN Engine 30 across the system bus 42 that a region of interest (ROI) of an image stored in DRAM 40 and indicated by the CPU 50 is to be analyzed and classified. The controller 60 can be implemented as a fixed state machine, or it can be programmable (a CPU). In either case, the configurable succession of feature extraction and classification operations to be performed by the CNN Engine 30 is determined by the CPU 50 by setting registers within the controller 60 via the system bus 42.

Once configured, the controller 60 then communicates with various modules within the CNN Engine 30 to read the required image or image map information and CNN weight information from DRAM 40 and to process this information before providing a classification for the image information to the DRAM and/or the calling application for use subsequently.

The CNN Engine 30 comprises the following modules:
An image cache 31 exposes a data input port (din) and a data output port (dout) to the remainder of the CNN engine 30. Data is read through the data input port (din) either from DRAM 40 via read controller 36 or from the output of a convolution engine 32 via a sub-sampler 34 to an address specified at an address port of the image cache by the controller 60. (Note that in the present description, the term convolution engine 32 is used, however, it will be appreciated from the description below that in embodiments, the engine 32 can implement both convolution layers and other forms of layer such as fully connected layers (which can in any case be regarded as a form of convolution layer where the kernel size (width x height x channels) is equal to the size of the (multi-channel) map to which it is applied) for a multi-layer neural network for example as illustrated in Figure 1.) Switch 35 is provided to enable image/map data to be initially provided via the read controller 36 from DRAM 40, but subsequently, for information generated by the various layers of the convolution engine 32/sub-sampler 34 to be read back into the image cache 31 as described below.

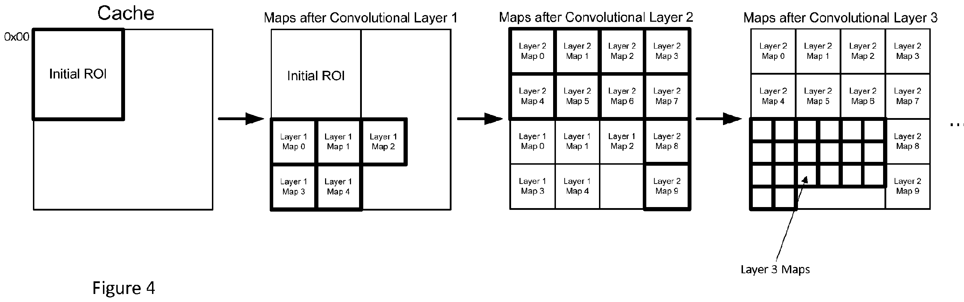

Referring now to Figure 4, an initial ROI image/map is first loaded in the image cache 31 and typically extends from address 0x00, offset 0 of the image cache. Note that the cache is addressed in a 2D fashion with an address comprising an address row and an offset at the address. After the first convolution and subsampling layer of feature extraction, a number of maps, in this case 5, Layer 1 Map 0...Layer 1 Map 4, are generated. In this case, these are written to address lines of the image cache 31 following the last address location of the initial ROI image/map. As these maps are typically sub-sampled relative to the initial ROI image/map at a scale of 2, two of these maps can be written within the same address range as the initial ROI image/map. Also note that as the width of these maps is a fraction of that of the ROI image/map, multiple layer 1 maps can be written to the same address space, shifted at offsets of one map width relative to one another. As will be seen, as processing progresses, for each new layer, the number of maps can be larger, but the size of the maps typically decreases due to subsampling. In, this example, convolution layer 2 generates 10 maps from the 5 maps produced by convolution layer 1, but without subsampling. The new maps produced by convolution layer 2 can overwrite the area of the image cache that was used by the initial ROI image/map as this is no longer required for processing subsequent layers. Note that again Layer 2 Maps 1...3 are successively shifted within the cache relative to one another and Map 0; as are Maps 5...7 relative to Map 4. Also, note that Layer 2 Maps 8 and 9 are written within the address space of the Layer 1 maps, but shifted relative to these maps. Nonetheless, if the image cache were large enough, the initial ROI image/map could be preserved to be used for other processing, for example, if a new classification were required or if the cache were shared with other processing engines. In the example of Figure 4, convolution Layer 3 produces 20 subsampled maps from the 10 maps of layer 2. Again, these can overwrite the maps of layer 1 as these are no longer required.

Note that for the purposes of image cache access, vectors produced by the feature classification layers are treated as if they were 1D maps containing 1xW cells of pixel values.

In each case, a start location, comprising the base address and extent of shifting, the offset, of an image/map, map or vector within the image cache 31 is determined by the controller 60 according to the configuration received from the CPU 50.

For the purposes of the following description, we will describe relative addresses within each map and how these are determined, assuming that the start location is added to these relative addresses.

In any case, it will be seen that the image cache 31 is initially loaded with an input image/map from DRAM 40. Then all processing can be performed only using this image cache 31 with no need to access the external DRAM for image information until classification is complete. After each convolution/subsampling stage, the intermediate image maps/vectors are written back to a different image cache area determined by the controller 60. Those maps/vectors can then be read for processing by the next processing layer, before writing further intermediate or final maps/vectors back into a different image cache area. Maps/vectors written back to the image cache 31 can overwrite maps/vectors from more than 1 previous iteration e.g. layer 2 output maps can overwrite the original input image/map, as this is not required for subsequent layers.

In the implementation of Figure 3, data can be read from the output port dout or written to the input port din of the image cache 31 in NxM windows of pixels ranging from 1x1 (a single pixel) to 5x5 and, depending on alignment, up to 8x8 pixels extending from a (relative) base address for a window. Thus, for 8bit pixel values the data ports are 512 (8x8x8) pixels wide. Nonetheless, it will be appreciated that the invention could equally be implemented with pixels of different resolutions than 8bits.

Note that once feature extraction/classification is complete, any of the generated maps/vectors can be written back to DRAM 40 via a write controller 39. Nonetheless, the controller 39 or controller 60 may only be required to provide the final classification values and so the write controller 39 is not essential or at least the write controller 39 may only be required to provide final classification values.

A weights cache 37, similar to the image cache 31, stores the weights used in both feature extraction and feature classification. As explained above, for feature extraction, the weights are convolution kernel values; whereas for feature classification, the weights are fully connected layer neuron/connection weight values. Read controller 38 for the weights cache brings weight values from DRAM 40 before processing each layer. For example, in a feature extraction convolution layer, if there are 5 input maps and the kernel size is 5x5, 5x5x5 (75) weights have to be brought from DRAM before the generation of each output map. In feature classification, more weights could be needed than the maximum space available into the weights cache 37. If so, then processing is done using a first of set of weights filling the weights cache 37, then the next weights are brought from DRAM 40 before processing continues with the new weights. For example, if a vector to be classified has 2048 elements and an output vector has 15 elements, 15x2048 weights are needed for the fully connected layer i.e. there are 2048 weights needed for every element of the output vector. If the weights cache has size 1024, the read controller 38 for the weights cache 37 brings the first 1024 weights needed for computation of the first element of the output vector, the computation is done using these weights, then the read controller 38 brings the next 1024 weights needed for computation of the element, then the computation continues, then it brings the first 1024 weights needed for computation of the second element of the output vector and so on.

It will be appreciated that if implementations employed a typical 8-bit floating point (FP) representation for the weight values, using for example, 1 bit for sign, 4 bits for exponent and 3 bits for mantissa, some weight values could tend to be zeroed or saturated.

Thus in some implementations, rather than increasing the storage requirement, the memory bandwidth and the computational requirements by using 16 bits or more for weight representation, a default FP exponent bias is changed to a custom value.

In a standard FP representation, the default exponent bias is computed as $2^{exp-1} - 1$ where $exp$ is the number of bits used for exponent representation (4 in this case); this bias is subtracted from the binary representation of the exponent, leading to the actual exponent; so for 4 bits for exponent, the range of values for the exponent value is from 0 to 15D; subtracting the bias (7D in this case) leads to actual exponent values from -7D to 8D; an exponent equal with -7D means a subnormal weight; an exponent of 8D is not a number (NaN) in FP representation; therefore, the actual range of possible exponents is from -6D to 7D (i.e. $2^{-6}: 2^7$). This is a symmetric representation which may be used to create a balance between representing small and large numbered weight values.

However, in some embodiments, in order to provide a better representation for more common smaller numbered weight values, the exponent bias is changed to larger values, thus leading to an asymmetric representation between small and large numbers; for instance, using an exponent bias equal to 12D, the actual exponent values would be from -11D to 2D, resulting in a better precision for representing smaller numbered weight values (i.e. $2^{-11}: 2^2$).

By using the proposed weight representation, in typical cases, the network's performance remains the same as in the case of using floating-point representation with a larger number of bits but with a default bias.

Further improvements can also be made in relation to the handling of weight values within the engine 30, 30'. For example, a weight compression technique can be used to reduce the size of the fully connected layer weights and so the memory access requirements for transferring to and/or storing weight values in the weights cache 37. So for example, RLE (Run Length Encoding) can be employed to compress sequences of one or more zeroes in weight values for a layer. When using such a scheme, it is preferable to compress zero values as for most neural network layers, up to 70% or more of the weights can be rounded to zero with minimal effect on the performance of the neural network. This pruning of small valued weights has the effect of removing (pruning) a corresponding connection from the neural network.

Furthermore, such encoding can take advantage of floating point values of minus zero and subnormal which can all be zeroed; whereas NaN (not a number) and positively/negative infinite values can be saturated to the largest positive/negative valid value as per the table below:

| S | EXP | | | Mant | | | | FP Value | | | | | S | EXP | | | Mant | | | | FP Value |
|---|---|---|---|---|---|---|---|---|---|---|---|---|---|---|---|---|---|---|---|---|---|
| 1 | 0 | 0 | 0 | 0 | 0 | 0 | 0 | Minus Zero | | | | | 0 | 0 | 0 | 0 | 0 | 0 | 0 | 0 | Zero |
| 0 | 0 | 0 | 0 | x | x | x | x | Subnormal | Saturation | | | | 0 | 0 | 0 | 0 | 0 | 0 | 0 | 0 | Zero |
| 1 | 0 | 0 | 0 | x | x | x | x | Subnormal | ⟶ | | | | 0 | 0 | 0 | 0 | 0 | 0 | 0 | 0 | Zero |
| 0 | 1 | 1 | 1 | x | x | x | x | NaN or Infinite | | | | | 0 | 1 | 1 | 0 | 1 | 1 | 1 | 1 | Max valid value |
| 1 | 1 | 1 | 1 | x | x | x | x | NaN or Infinite | | | | | 1 | 1 | 1 | 0 | 1 | 1 | 1 | 1 | Min valid value |

The zeroing/saturating of subnormal, NaN and infinite values mean that quite a few possible floating point values (indicated by the permutations of x within the table above) are not normally used anymore. These otherwise unused values can be used to encode variable length sequences of from 1 to 64 consecutive zero values as follows:

• The sign bit is the MSB (most significant bit) of the encoded number;
• All exponent bits are combined into next bit (MSB-1 location);
• The mantissa bits form the LSB (least significant bits) part of the encoded number;
• The resulting number is incremented by one with the resulting number encoding the number of zeroes.

It should also be noted that it is possible to use different formats for weight values from one layer to another. Thus, weights which might compress better in one format can be used in that form for a given layer while weights for another layer could use different formats. The simplest variation of format involves selecting the optimal exponent bias for each particular layer, not necessarily 7D or 12D as disclosed above. In any case, compression along the lines above can be applied to any such format.

Note that in some embodiments, each of the read/write controllers 36, 38 and 39 can read or write more than 1 pixel/weight/cell from/to system memory 40 in one clock cycle. For example, if the system bus 42 comprises 64 bits, 8 pixels/weights/cells could be transferred across the bus 42 in one clock cycle. Thus, an 8x1 pixel window, set of weights or vector could be read/written from or into the caches 31 or 37 in one transaction. In particular, for a 64bit wide system bus 42 where inside a burst transaction on the system bus, new data is produced every clock cycle, if both the bus 42 and the cache 31 operate at the same clock frequencies, the controller 60 could operate in such a way that input data is aligned properly within the image cache 31 and so 8x1 pixels could be written to the cache 31 in one clock cycle. Indeed, with the data compression of weights described above, more weights can be read per clock cycle and this is useful in the case of fully connected layers, where it can be useful to read as many weights as possible each clock cycle.

The 3D Convolution Engine 32 has two modes of operation:

• Feature extraction mode

• Feature classification mode.

In the feature extraction mode the weights needed to generate a current output map are read from DRAM 40 by the read controller 38; and the input image/map is initially read by the read controller 36. The input data for each output map pixel and the weights are presented to the convolution engine 32. A window of NxM pixel values for each input map is read from the image cache 31 in a given clock cycle, whereas the weights for an output map need only be provided once per output map. The convolution engine 32 performs a number of scalar (dot) products followed by an activation function to produce a pixel value. If there is a down-sampling after a convolution layer, the sub-sampler 34 performs a max-down-sampling and the resultant data is provided to a sub-sampler data output interface ready to be written back to the image cache 31. (Other sub-sampling schemes such as averaging could also be used.) The most common subsampling scale is 2 in both x and y directions. This means that a block of 2x2 pixels after the convolution engine 32 is combined into one pixel provided to the sub-sampler data output interface. If no sub-sampling is required, the data generated by a convolution engine processing layer can be sent directly to the sub-sampler data output interface. Data can then be written from the sub-sampler data output interface to the image cache 31 via the switch 35 in the same manner as data provided from the read controller 36.

In feature classification mode, weights are read from DRAM 40 with the read controller 38. The input vector to be classified is organized in the image cache 31 similar to a map used in feature extraction, but with a size of 1 line and a width (W) equal to the length of the feature vector. Therefore, vector data can still be read from memory in windows of multiple pixels if required. However, given that more weights per vector cell may be required than can fit in the weights cache 37, reading data for multiple vector cells in a single clock cycle may not be highly advantageous. Nonetheless, for each vector cell, the convolution engine 32 performs a number of scalar products followed by activation functions; and the resultant data is sent to the sub-sampler data memory interface, as before, in order to be written into the image cache 31. This is repeated until the entire output vector is computed and written into the image cache 31. At the end, the final output vector comprising the classification for the ROI is sent out by the write controller 39 to DRAM 40 for further processing.

As indicated above, especially during feature extraction, the convolution engine 32 can process windows of NxM pixels provided by the image cache 31 each clock cycle. In order to produce one output pixel in a given output map, the convolution engine 32 needs: one clock cycle for 2D convolution; or a number of clock cycles equal to the number of input maps for 3D convolutions. The same convolution architecture can be used for feature extracted and classification. For feature classification, each neuron/connection of the fully connected layers will have a different weight so the number of weights will typically be greater than for convolutional feature extraction where the same convolutional kernel is applied when calculating each pixel of a new map. Once the image data and weights are available within the image cache 31 and weights cache 37, the convolution engine 32 performs a number of scalar products to produce an output pixel value. It is appreciated that using a more parallelized cache 31 could accelerate the process by for example calculating pixels for output maps in parallel, but this would excessively increase the size of the convolution engine 32.

As will be described in more detail below, as well as reducing the bandwidth requirement for accessing the system DRAM 40 by reading an image portion from DRAM only once during image classification; the image cache 31 is arranged to accelerate processing by producing rectangular windows of NxM pixels for use within the convolution engine 32 in as few clock cycles as possible and preferably in a single clock cycle.

A typical size for the convolution kernels for embedded applications is 5x5, but it will be appreciated that this may vary. Embodiments of the present invention can operate with kernels of any size up to 5x5 operating on windows located at any (x, y) location in the image cache 31 and, depending on alignment within an input/output map, potentially up to 8x8 pixels.

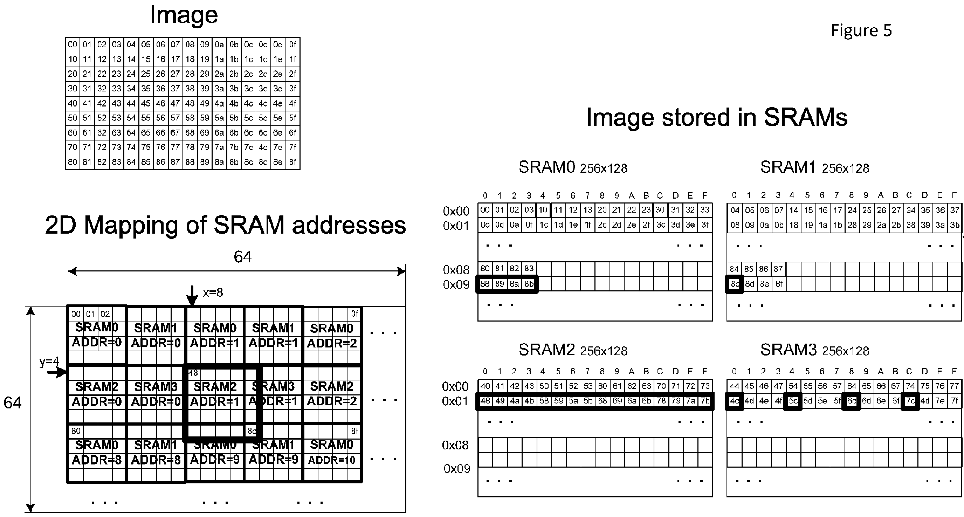

Referring to Figure 5, in embodiments of the present invention, the image cache 31 comprises an interleaved memory architecture allowing reading and writing of blocks of pixels in one clock cycle. In the embodiment, there are 4 SRAM instances - SRAMO to SRAM3.

In Figure 5, the left-hand side shows the 2D organization of the image cache for a 64x64 pixel image region. In Figure 5, pixel indices begin with 00 and image cache addresses at 0x00. These can each be relative addresses both within an image, image ROI or the image cache 31, with the absolute address comprising the relative address plus a start location being determined by the controller 60 as explained above in relation to Figure 4.

The right hand side of Figure 5 shows how image data is stored in each SRAM. At each (x, y) SRAM address coordinate, a block of 4x4 pixels is stored. So at address 0x00 of SRAM2, a block of 4x4 pixel values from index 40 to 73 are stored. Similarly, at address 0x01 of SRAM3, a block of 4x4 pixel values from index 4c to 7f are stored. In the example, a 5x5 window at address (8, 4) extending from pixel 48 to 8c is being addressed and the numbers inside each pixel represent the index of that pixel in the input/output window. This arrangement allows reading and writing of blocks of pixels in only one clock cycle as follows:

Block of size 1x1 up to 5x5 pixels can be read from or written to any location. It will be seen that in some cases windows of greater than 5x5 pixels, say from address (7, 3) would require data to be read from more than 2 addresses of SRAMO, SRAM1 and SRAM3. So in order to read/write window information in a single clock cycle, window blocks of 6x6 pixels can only be read from even x and y coordinates; whereas window blocks of 7x7 and 8x8 pixels, can only be read from locations with x and y coordinates that are multiples of 4. Window sizes above 8x8 pixels need more than 1 clock cycle to be read from the image cache 31. Nonetheless, non-rectangular blocks of pixels can also be accessed with independent maximum size limitation for x and y directions.

For embedded applications, 5x5 convolution kernels fit very well with the maximum window size limit of the cache. As indicated, for larger kernel sizes, reading with steps of 2 or 4 pixels can be used; if not, multiple reads would have to be done from the image cache 31. In any case, the use of this image cache 31 simplifies the CNN Engine 30, as large blocks of pixels feeding the convolution engine 32 can be accessed each clock cycle.

Although not essential, it can be more convenient that any new map is written at a new start address within the image cache 31.

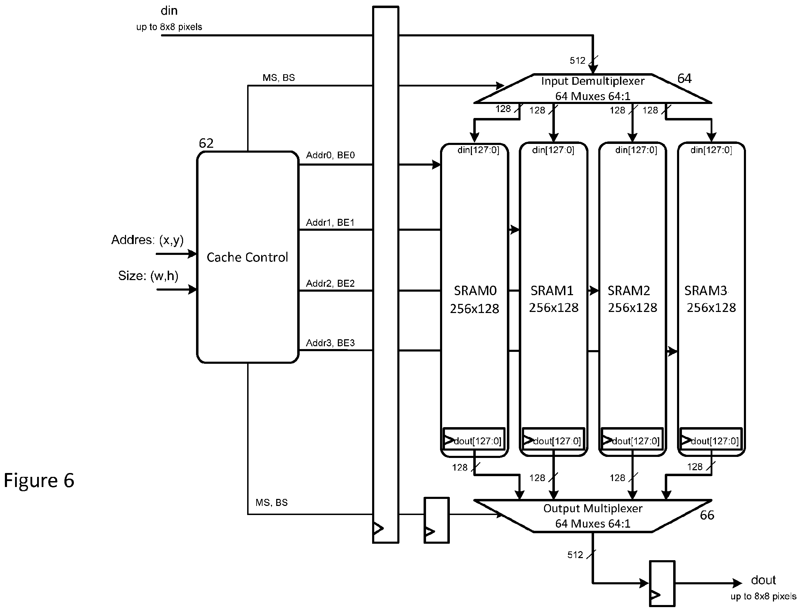

The internal structure of the cache is presented in Figure 6. Including the output register (dout), there are three pipeline stages in this implementation. (There can of course be fewer or more registers, increasing or decreasing the pipeline length (and latency) of the cache. Three is just used in this embodiment as it provides a good compromise between area and performance.) As the image cache 31 can provide a new NxM window every clock cycle, if the convolution engine 32 can also process such a window in one clock cycle, data can move through the pipeline one window, one dot product and one output register write per clock cycle. So when performing a read operation, the output data can be available after 3 clock cycles, but after this, successive read operations can be performed each clock cycle. New read and write operations can of course be initiated every clock cycle, and also read and write operations can be mixed in any order.

The implementation of Figure 6 comprises the following sub-modules:

- Cache control block (62):

  ∘ Receives the x, y coordinate and window size (w, h) for a read or write operation; and
  ∘ Calculates input data de-multiplexer and output data multiplexer selection signals (MS,BS);
  ∘ Transforms the x, y, w and h inputs into Address (ADDR) and Byte (Pixel) Enable (BE) control signals for each of the four SRAMs.

- Input Data De-multiplexer (64) and Output Data Multiplexer (66):

  ∘ The blocks 64, 66 route each input/output pixels data to and from the correct SRAM and to the correct pixel location within each SRAM data in and data out ports. As indicated, the input and output data presented at the din port by the read controller 36 or the sub-sampler data output interface or the dout port by the image cache 31 is organized in a 2D window comprising up to 8x8 pixels of data, with the (x,y) window address referring to the window origin, which is located in the left-top corner.

**Address calculation**

The addresses ADDR0 to ADDR3 for each memory instance SRAM0 to SRAM3 respectively can be calculated by the cache control block 62 using the following formulae (using Verilog like syntax).

- **ADDR0 = {(y+4)>>(sqrt(n)-1), (x+4)>>(sqrt(n)-1)}**
- **ADDR1 = {(y+4)>>(sqrt(n)-1), x >>(sqrt(n)-1)}**
- **ADDR2 = {y >>(sqrt(n)-1), (x+4)>>(sqrt(n)-1)}**
- **ADDR3 = {y >>(sqrt(n)-1), x >>(sqrt(n)-1)}**

where {A, B} means A concatenated with B, where A and B are signals of one or more bits, so if A and B are 4 bit signals, {A, B} will be an 8 bit signal; and where $n$ is width of the image cache memory in 4x4 blocks, so in the current example n=16 to accommodate a 64 pixel wide image.
Thus, y is decimated to provide the most significant bits of the address row; whereas x is decimated to provide the least significant bits of the address row.
Thus, it will be seen that in order to implement the above described addressing scheme, the cache width should be in powers of two.
On the other hand, the number of rows in the image cache 31 should ideally be at least as large as the first input image/map(s) and, usefully, the number of rows should be sufficient to accommodate both the input image/maps and output maps of at least one convolution layer. In the example, of Figures 5 and 6, for a 64 row image, 256 rows are ample to store both the input image/maps, output maps from at least one layer and feature extraction vectors.
It will nonetheless the appreciated that in practice, images are likely to be larger than 64x64 pixels, and so $n$ in the example above is likely to be much larger than 16.
It can be noticed that only two adders are needed to calculate the addresses: x+4 and y+4. The shift by 3 operations translates to a simple bit select needing no logic gates in a hardware implementation.
If the image cache memory width were not a power of two, then more complicated logic than outlined above would be required to determine the required image cache address line for each SRAM.

**Memory select**

Selection of memories SRAM0...SRAM3 for any pixel of a window to be read or written from/to the image cache 31 is performed by the cache control block 62. Depending on the (x, y) address, each pixel within the din/dout ports corresponds to one of the four memory instances SRAM0...SRAM3. Each of the four memory select signals MS00...MS11 has two bits, encoding the corresponding memory:

- 00 - SRAM0

- 10 - SRAM1

- 01 - SRAM2

- 11 - SRAM3

Two sets of signals: memory select (MS) and byte select (BS) are used by the cache control block 62 to calculate byte enable signals BE0...BE3 for the memories SRAM0...SRAM3.

The formulae for the memory select (MS) signals for the pixels of a window extending up to 8x8 pixels from the (x, y) origin can be described using Verilog style syntax as follows:

- **MS00 = {( y [2] == 0), (x [2] == 0)}**
- **MS01 = {((y+1)[2] == 0), (x [2] == 0)}**
- **MS02 = {((y+2)[2] == 0), (x [2] == 0)}**
- **MS03 = {((y+3)[2] == 0), (x [2] == 0)}**
- **MS04 = {((y )[2] == 1), (x [2] == 0)}**
- **MS05 = {((y+1)[2] == 1), (x [2] == 0)}**
- **MS06 = {((y+2)[2] == 1), (x [2] == 0)}**
- **MS07 = {((y+3)[2] == 1), (x [2] == 0)}**
- **MS10 = {( y [2] == 0), ((x+1)[2] == 0)}**
- **MS11 = {((y+1)[2] == 0), ((x+1)[2] == 0)}**
- **MS12 = {((y+2)[2] == 0), ((x+1)[2] == 0)}**
- **MS13 = {((y+3)[2] == 0), ((x+1)[2] == 0)}**
- **MS14 = {((y )[2] == 1), ((x+1)[2] == 0)}**
- **MS15 = {((y+1)[2] == 1), ((x+1)[2] == 0)}**
- **MS16 = {((y+2)[2] == 1), ((x+1)[2] == 0)}**
- **MS17 = {((y+3)[2] == 1), ((x+1)[2] == 0)}**
- **...**
- **MS44={((y)[2] == 1), ((x+4)[2] == 0)}**
- **...**
- **MS70 = {( y [2] == 0), ((x+7)[2] == 0)}**
- **MS71 = {((y+1)[2] == 0), ((x+7)[2] == 0)}**
- **MS72 = {((y+2)[2] == 0), ((x+7)[2] == 0)}**
- **MS73 = {((y+3)[2] == 0), ((x+7)[2] == 0)}**
- **MS74 = {((y )[2] == 1), ((x+3)[2] == 1)}**
- **MS75 = {((y+1)[2] == 1), ((x+3)[2] == 1)}**
- **MS76 = {((y+2)[2] == 1), ((x+3)[2] == 1)}**
- **MS77 = {((y+3)[2] == 1), ((x+3)[2] == 1)}**

where A[2] means bit 2 (the 3$^{rd}$ least significant bit) of signal A.

So, in the example of Figure 4, the memory selected for pixel 59 (MS 11 of the window extending from pixel 48 to 8c) is:

$$y+1=5D=0101h, \quad x+1=9D=1001h,$$

y+1[2]=1≠0, x+1[2]=0==0, ⇒ MS11=01=SRAM2 whereas the memory selected for pixel 5c, MS14 of the window is:

$$y=4D=0100h, \quad x+1=9D=1001h$$

$$y[2]=1==1, \quad x+1[2]=0==0, \Rightarrow MS14=11=SRAM3$$

and the memory selected for pixel 8c, MS44 of the window is:

$$y=4D=0100h, \quad x+4=9D=1100h$$

$$y[2]=1==1, \quad x+4[2]=1≠0, \Rightarrow MS14=10=SRAM1.$$

Again, it can be noticed that only the x+1, x+2, x+3 and y+1, y+2, y+3 sums are needed to calculate all the memory select (MS) signals.

MS00...MS77 indicate to the cache control block 62 the SRAM each pixel of their NxM input/output data output interface is to be read from/written to. Now the cache control block 62 needs to assert a byte (pixel) enable signal BE0...BE3 for each of the SRAMs to signal which specific pixels of the 16 pixels stored at any given memory address are to be read from/written to. (Note that in this case, the term byte is used synonymously with 8bit pixels, however, this would vary in embodiments using different pixel resolution.)

Looking again at the example of Figure 5, it will be seen that all 16 pixels from address 0x01 of SRAM2 are required, whereas only pixel 0 from address 0x09 of SRAM1 is required when reading or writing the 5x5 window shown. Thus, as well as knowing to or from which memory a pixel is to be written or read, the cache control block 62 also needs to determine to or from which offset within a given memory address is pixel is to be read or written.

One embodiment of the invention begins by first of all determining an 8x8 array of byte select signals (BS) starting from the specified (x,y) address in a similar manner to the memory select (MS) signals above. Then, especially depending on the size of the window being written (this is not as critical for reading), some of the BS signals will be masked to generate byte enable signals BE0...BE3. For example, for a 7x7 window BS signals BSx7 and BS7y where x=0...7 and y=0...7 will be masked to preventing data being written to (or possibly read) the last row and column of an 8x8 window and so overwriting data within the image cache 31. For a 5x5 window, BS signals BSab, where a=5...7 and where b=0...7; and BScd, where c=0...7 and where d=5...7 will be masked, preventing data being written to (or read) the last 3 rows and columns of an 8x8 window.

The byte select (BS) for all pixels can be calculated within the cache control block 62 with a fixed **rotate shift** of BS00 (that corresponds to the window origin) as shown below. This means that all the byte select signals can be calculated without the need of logic gates.

Here are the byte select calculation formulas, in Verilog style syntax:

| | |
|---|---|
| **BS00 = one_hot ({y[1:0], x[1:0]})**<br>**BS01 = BS00 >> 1** | **BS10 = BS00 >> 4**<br>**BS11 = BS00 >> 5** |
| **BS02 = BS00 >> 2**<br>**BS03 = BS00 >> 3**<br>**BS04 = BS00**<br>**BS05 = BS02**<br>**BS06 = BS03**<br>**BS07 = BS04** | **BS12 = BS00 >> 5**<br>**BS13 = BS00 >> 7**<br>**BS14 = BS10**<br>**BS15 = BS11**<br>**BS16 = BS12**<br>**BS17 = BS13** |
| **BS20 = BS00 >> 8**<br>**BS21 = BS00 >> 9**<br>**BS22 = BS00 >> 10**<br>**BS23 = BS00 >> 11**<br>**BS24 = BS20**<br>**BS25 = BS21**<br>**BS26 = BS22**<br>**BS27 = BS23** | **BS30 = BS00 >> 12**<br>**BS31 = BS00 >> 13**<br>**BS32 = BS00 >> 14**<br>**BS33 = BS00 >> 15**<br>**BS34 = BS30**<br>**BS35 = BS31**<br>**BS36 = BS32**<br>**BS37 = BS33** |
| **BS40 = BS00**<br>**BS41 = BS01**<br>**BS42 = BS02**<br>**BS43 = BS03**<br>**BS44 = BS00**<br>**BS45 = BS01**<br>**BS46 = BS02**<br>**BS47 = BS03** | **BS50 = BS10**<br>**BS51 = BS11**<br>**BS52 = BS12**<br>**BS53 = BS13**<br>**BS54 = BS10**<br>**BS55 = BS11**<br>**BS56 = BS12**<br>**BS57 = BS13** |
| **BS60 = BS20**<br>**BS61 = BS21**<br>**BS62 = BS22**<br>**BS63 = BS23**<br>**BS64 = BS20**<br>**BS65 = BS21** | **BS70 = BS30**<br>**BS71 = BS31**<br>**BS72 = BS32**<br>**BS73 = BS33**<br>**BS74 = BS30**<br>**BS75 = BS31** |

(continued)

| BS66 = BS22 | BS76 = BS32 |
|---|---|
| BS67 = BS23 | BS77 = BS33 |

In this case, the two least significant bits of the (x,y) address can be used to determine from which of the 16 pixels at a given memory address, a window pixel corresponding to the (x,y) address is to be read, essentially this comprises an offset within a given memory address where the pixel is located. The four (2x2) bits of the (x,y) address can be mapped to this one of 16 pixels using a one-hot function. (One-hot refers to a group of bits among which the legal combinations of values are only those with a single high (1) bit and all the others low (0).) It will then be seen that that the relative addresses of the remaining pixels of the byte select (BS) matrix are shifted in 4 steps of 1 before cycling.

So, looking at BS00 in the example, of Figure 5, y[1:0]=00h, x[1:0]=00h and so byte 0 of Address 0x01 from SRAM2 is selected (SRAM2 having been determined using the MS matrix and Addr 0x01 having been determined as explained above). If the origin of the selected window were shifted left to address (7, 4), then the one-hot function would indicate {00,11} = byte 3 to be selected (of Address 0x00 from SRAM3).

All of the remaining elements of the byte select (BS) matrix can be derived from the value of BS00 as they shift in steps of 4x4 in tandem with the shifting origin of a window being addressed.

So combining the MS and BS matrices indicates provisionally the byte enable signals BE0...BE3 for each SRAM0...SRAM3 before masking the provisional signals according to the size (w,h) of the window to determine the final BE0...BE3 values.

Separately, each of the MS and BS matrix values are provided to the input data de-multiplexer 64 and output data multiplexer 66 (possibly according to whether the access is read or write) so that the values from the BE enabled addressed within the SRAMs can be selected and connected either with data being provided at the data input port (din) or being provided to the data output port (dout).

In the above described example, MS and BS matrices are determined for each input/output (I/O) request by the cache control block 62. However, it will be appreciated that the functionality implemented within the cache control block 62 can be shifted to the de-multiplexer 64 or the multiplexer 66 as required or vice versa.

In alternative implementations, the image cache 31 could be further parallelized to enable input maps to be scanned simultaneously so that output map pixels could be generated at a rate of 1 per clock cycle. However, increasing the number of pixels that can be read in parallel would greatly increase the size of the multiplexing/demultiplexing logic (For this cache the gate count of the multiplexing/de-multiplexing logic is already around 30KGates) and this may not be desirable.

The memory arrangement illustrated in Figures 5 and 6 has been described for implementation within the image cache 31 so that NxM windows of image or map pixels or 1xW windows of vector cells can be made available to the convolution engine 32 in a single clock cycle. It will be appreciated that the weights cache 37 could be implemented in a similar fashion especially so that convolution kernels could be provided to the convolution engine 32 as quickly as possible at the beginning of image or map or vector processing.

In still further variants of the above described embodiments, the image cache 31 can be employed with other forms of image processor than the convolution engine 32. For example, the image cache can be used in any high performance image or 2D map processing application where map elements (pixels) need to be accessed (read or write) in rectangular blocks from random locations in an efficient way - one block per clock cycle at any location in the cache. Such processing might not require a weights cache 37; or alternatively an equivalent to the weights cache might be used to store general purpose kernel values employed by the image processor. In spite of the number of interleaved memories within the image cache remaining the same, the size of block of pixels transferred between the image cache and the image processor in any given clock cycle can be configured for any given application being executed by a CPU, such as the CPU 50, so that for example different sized kernels can be applied to input images to produce different effects for output images.

It will be seen that embodiments of the invention can implemented with main controller 60 requiring only a minimal number of commands including:

RD - Read map from System Memory
WR - Write map to System Memory
CONV - Convolution
END

This allows the engine 30 to be implemented in a very rationalized fashion.

Still further variations of the above described embodiments are possible. It will be appreciated that when processing in real-time a number of frames of video, say more than 30 per second, with each frame requiring processing through a number of layers of convolution, the persistence of layer information within the cache 31 need only be quite short, possibly in the order of milli-seconds i.e. at a minimum it need only be short enough to be written to the image cache either initially or after layer processing and then read from the image cache back to system memory 40 or for further layer processing.

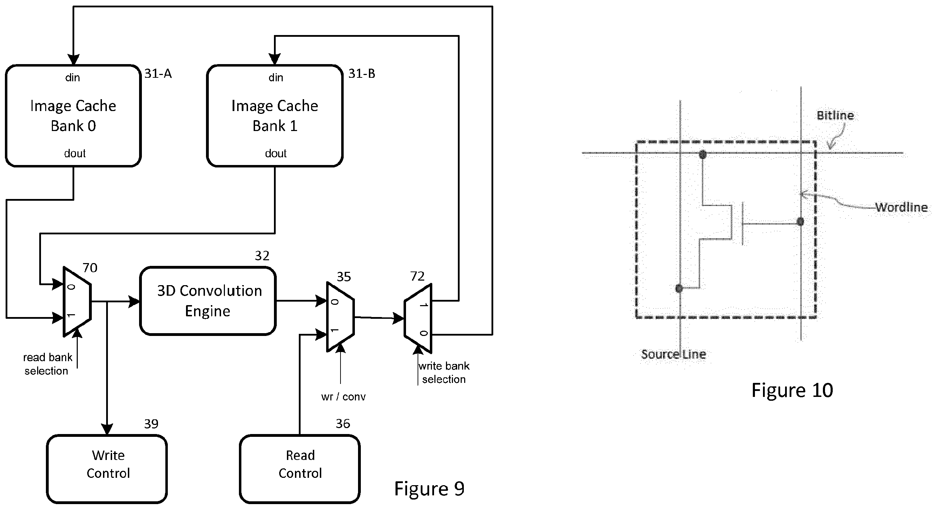

Thus, in some embodiments of the present invention, the image cache 31 is implemented with single transistor cells where the charge for each programmed cell is stored in either parasitic transistor or substrate capacitance. An exemplary architecture for floating body variant of such a cell is shown in Figure 10. Such cells enable a charge to be applied to a bit of memory, but the memory array including such cells does not require circuitry for refreshing the memory, as in conventional DRAM. Other examples of single transistor memory cells are also disclosed in US 8518774, US 8014195 and US 8325515 from Micron Technology, although some of these arrangements are still concerned with providing refresh and hold functionality, while another example of refreshless DRAM is disclosed in WO2008/054987. It will be seen that the size of the cell and so the capacitance determines the maximum storage time for a given cell and so as the CNN increases the speed at which it processes layers for example as network depth or frame rate increases, the cells can become smaller and so the array size and/or density of the image cache can be increased to handle larger networks. Thus, such cell designs enable much greater memory density within the cache 31 and so allow for much larger networks to be implemented by the CNN Engine 30.

Handling larger networks, however, has repercussions for the remainder of the CNN Engine 30, because the larger and/or deeper the network being implemented by the CNN Engine 30, the more extensive the network configuration information for the network becomes.

If this information were to be read from DRAM 40 across the system bus 42 each time the CNN Engine were initialized, then this could severely restrict system performance.

On the other hand, network configuration information including a layer topology definition and weights for a network essentially remains the same once a network is trained.

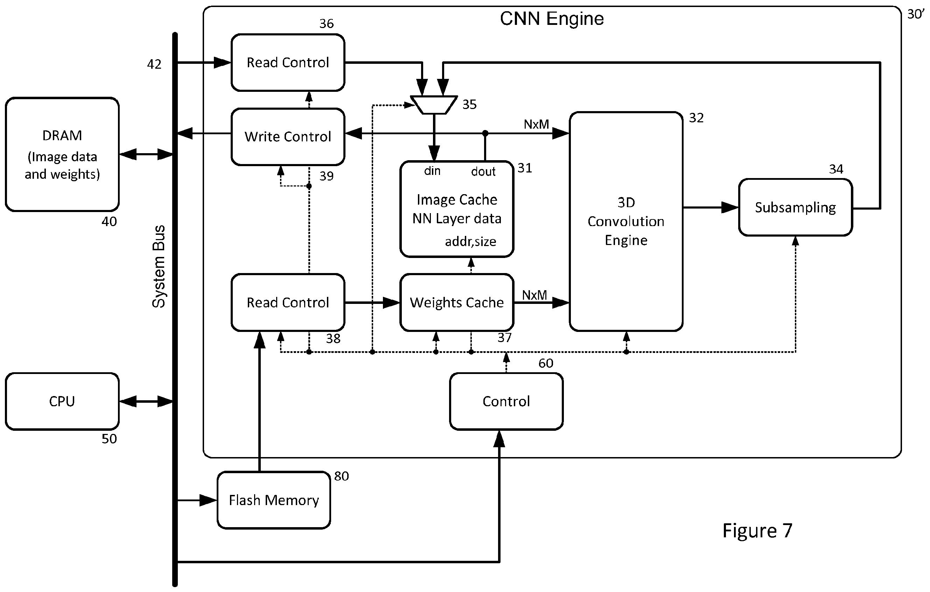

So referring now to Figure 7, there is shown a further variant where the CNN Engine 30' includes on-board flash memory 80. The memory 80 need only be programmed once with network configuration information for a given network and thus the read controller 38 can obtain weight information directly from the memory 80 and provide this to the cache 37 as before without utilizing the system bus 42. (Although not shown, it is also possible for the memory 80 to be accessible to the controller 60, so that it can obtain network configuration information, for example, the layer topology definition, without utilizing the system bus 42.)

In one embodiment, the flash memory 80 can be implemented on one die and this can be stacked on one or more further die implementing the remainder of the CNN Engine 30' functionality. Methods for stacking such die include ZiBond and DBI from Invensas a Tessera company and these provide 3D Wafer/ Die Bonding Solutions enabling wafer-to-wafer, die-to-wafer or die-to-die bonding and interconnection.

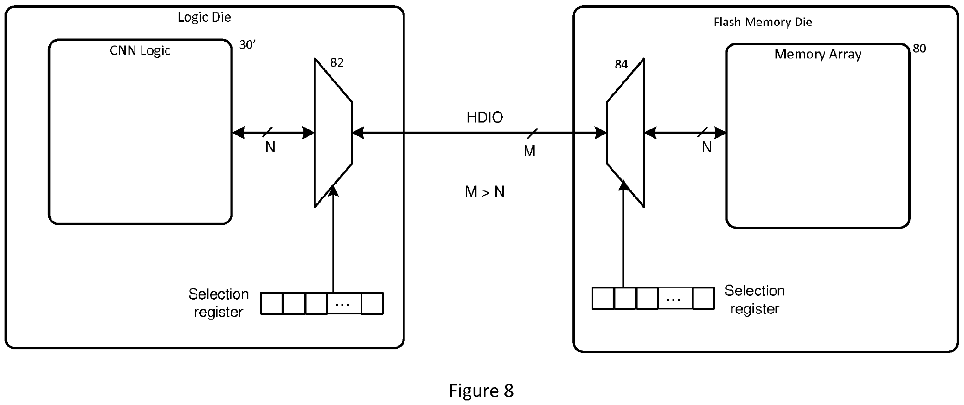

Referring now to Figure 8, there is shown schematically the logic for the remainder of the CNN Engine 30', implemented on one die, connected to flash memory 80 implemented on another die. The on-die I/O pads for the HDIO interconnection are too fine to be tested on a production tester. This means that the HDIO interconnection between dies can only be tested after assembly. Moreover, defects can appear while assembling the two dies, resulting in interrupted interconnection lines.

In order to address this problem, in one implementation, redundant physical connections between the dies are provided. Then, using boundary testing on a production tester, the good connections are found, and the signals between the two dies are routed through these connection lines using respective selection registers 82 and 84. So, for N logical signals, M physical connections are available, with M>N. The ratio between M and N is chosen depending on the technology yields. The selection registers 82, 84 can be fuse-registers that are programmed on the production tester, depending on the test results.

Referring now to Figure 9, the image cache 31 of the previously described embodiments can be replaced with a double-buffered image cache comprising caches 31-A and 31-B (each cache comprising equivalent elements to the cache 31 as shown in Figures 6 and 7). The output port Dout of each cache 31-A, 31-B is connected via a switch (multiplexor) 70 to a write controller 39 (as in Figure 3). The input port Din of each cache 31-A, 31-B is connected via a switch (multiplexor) 72 to a read controller 36 (as in Figure 3). As in Figure 3, a further switch 35 determines whether new image data is written from system memory 40 or from the output of the convolution engine 32 (the sub-sampler 34 is not shown in Figure 3 for simplicity) into a selected cache 31-A or 31-B.

The arrangement of Figure 9 enables the controller 60 to determine which image cache 31-A or 31-B is to supply image/map information to the convolution engine 32 (or back to system memory) and to which image cache, the other of 31-A or 31-B, the resulting map is to be written as each layer of the convolution is being executed. Alternating read and write selection for each layer, allows the write bank for one layer to act as the read bank for the subsequent layer. However, as two separate memories are employed, this enables simultaneous reading of image/map information and writing of map information to the caches 31-A, 31-B so potentially doubling processing speed.

Finally, while it will be appreciated that the ability to read and/or write windows of NxM pixels to and from the image cache 31 in as little as one memory cycle, means operations which convolve a number X of images/map in a convolution layer require X number of memory cycles from the read image cache before a convolution can be performed.

In some embodiments, instead of storing only one pixel at one map address, pixels from several map channels, for example, 16 channels, are stored at a given address. This is particularly useful for CNNs which use multiple channel 3D maps for the convolutional layers and it means that image/map information for several channels can be read from image cache in a single memory cycle, so matching the speed at which resulting layers can be written and so maximizing throughput. Note that in a 3D convolution, each input channel contributes to each output channel. This means that using this technique, the number of MAC (multiplier-accumulator) operations that can be performed increases quadratically with the number of channels. Thus, by reading pixels from more than one source map (channel) per clock cycle, the throughput of a 3D convolution operation can be increased without unduly complicating write/read operations to the image cache 31; 31-A,31-B.

**Claims**

1. A convolutional neural network, CNN, engine (30) for an image processing system comprising:

    an image cache (31) comprising an input port (din) and an output port (dout), said image cache being responsive to a request to read a block of NxM pixels extending from a specified location within an input map to provide said block of NxM pixels at said output port;
    a convolution engine (32) being arranged to read weights for each layer of convolution processing from a weights cache (37), said set of weights associated with a given layer of a given CNN and being pre-calculated during a training phase of the CNN, and to read at least one block of NxM pixels from said image cache output port, to combine said at least one block of NxM pixels with a corresponding set of weights to provide a product, and to subject said product to an activation function to provide an output pixel value;
    said image cache being configured to write output pixel values to a specified write address via said image cache input port;
    said image cache comprising a plurality of interleaved memories (SRAM0...SRAM3), each memory storing a block of pixel values at a given memory address, the image cache being arranged to determine for a block of NxM pixels to be read from said image cache: a respective one address (Addr0...Addr3) within each of said interleaved memories in which said pixels of said block of NxM pixels are stored; a respective memory of said plurality of interleaved memories within which each pixel of said block of NxM pixels is stored; and a respective offset for each pixel of said block of NxM pixels within each memory address, so that said image cache can simultaneously provide said NxM pixels at said output port in a single clock cycle; and
    a controller (60) arranged to provide a set of weights to said convolution engine before processing at least one input map, to cause said convolution engine to process said at least one input map by specifying locations for successive blocks of NxM pixels and to generate an output map within said image cache by writing said output pixel values to successive locations within said image cache.

2. A CNN engine according to claim 1 further comprising a sub-sampler (34) arranged to selectively sub-sample output pixel values from said convolution engine and to provide output pixel values at a data output interface, said image cache being configured to write output pixel values from said sub-sampler data output interface to a specified write address via said image cache input port.

3. A CNN engine according to claim 1 further comprising a read controller (36) arranged to acquire image information across a system bus, the read controller being arranged to provide a data output interface to provide at least one pixel to be written to a specified write address within said image cache; and a write controller (39) arranged to provide image cache data across a system bus, the write controller being arranged to provide a data input interface to receive at least one pixel to be read from a specified address within said image cache.

4. A CNN engine according to claim 1 comprising A interleaved memories and wherein at each memory address there can be stored AxA adjacent pixels for a map.

5. A CNN engine according to claim 4 wherein where N≤A+1 and M≤A+1, said controller is arranged to freely access a block of NxM pixels at any location within a map.

6. A CNN engine according to claim 4 wherein A=4; and preferably where M=N=6, said controller is arranged to access blocks of NxM pixels at even numbered locations within a map; or where 6<M≤8 and 6<N≤8, said controller is arranged to access blocks of NxM pixels at only every fourth location within a map.

7. A CNN engine according to claim 1 wherein said controller is arranged to concatenate pixels from a plurality of output maps into a single vector of 1xW cells, and wherein said convolution engine is arranged to combine vector cells with a corresponding set of weights to provide a product, and to subject said product to an activation function to provide an output vector cell value.

8. A CNN engine according to claim 1 wherein said controller is arranged either: to write output maps to said image cache at different memory locations than input maps used to generate said output maps; or to overwrite input maps within said image cache with output maps from successive convolution layers.

9. A CNN engine according to claim 1 wherein said image cache comprises an cache control block (62) and for each block of NxM pixels to be accessed within said image cache, where M≤8 and N≤8, said cache control block is arranged to calculate an 8x8, MS, matrix where each cell indicates a respective memory of said plurality of interleaved memories within which each pixel of said block of NxM pixels is stored; to calculate an 8x8, BS, matrix where each cell indicates a respective offset for each pixel of said block of NxM pixels within each memory address; to combine said MS and BS matrices and to mask said combination according to the size of said block of NxM pixels to generate a respective byte enable (BE0...BE3) signal for each interleaved memory of said image cache.

10. A CNN engine according to claim 9 wherein either: said MS matrix is calculated using a combination of sums and compares; or said BS matrix is calculated using a combination of shifts and a one-hot function.

11. A CNN engine according to claim 1 further comprising a read controller (38) arranged to read said weights for each layer of convolution processing across a system bus into said weights cache, wherein said weights cache comprises a plurality of interleaved memories, each memory storing a block of weights at a given memory address, the weights cache being arranged to determine for a block of NxM weights to be read from said weights cache: a respective one address within each of said interleaved memories in which said weights of said block of NxM weights are stored; a respective memory of said plurality of interleaved memories within which each weight of said block of NxM weights is stored; and a respective offset for each weight of said block of NxM weight within each memory address, so that said weights cache can simultaneously provide said NxM weights at an output port in a single clock cycle.

12. A CNN engine according to claim 1 further comprising a read controller (36) for said image cache, said read controller being arranged to simultaneously provide a block of NXM pixel values to said image cache input port, the image cache being arranged to determine for said block of NxM pixels to be written to said image cache: a respective one address within each of said interleaved memories in which said pixels of said block of NxM pixels are to be stored; a respective memory of said plurality of interleaved memories within which each pixel of said block of NxM pixels is to be stored; and a respective offset for each pixel of said block of NxM pixels within each memory address, so that said image cache can simultaneously write said NxM pixels at said input port to said interleaved memories.

13. A CNN engine according to claim 1 in which said weights are stored as 8-bit floating point numbers with an exponent bias greater than 7D, and preferably wherein said exponent bias is equal to approximately 12D.

14. A CNN engine according to claim 1 wherein said weights comprise floating point numbers, wherein said weights are transmitted and/or stored in a compressed form, wherein prior to compression, floating point values of minus zero and subnormal are zeroed and not-a-number, positive and negative infinite values are saturated, and wherein said weights are compressed using run length encoding, RLE, wherein symbols used for uncompressed minus zero, sub-normal, infinite and/or not-a-number encode a number of consecutive zero valued weights in a sequence.

15. A CNN engine according to claim 1 wherein said image cache is arranged to store pixel data for a plurality of maps at each memory address so that successive blocks of NxM pixels for said plurality of maps can be read from said image cache in a single memory cycle in order to generate an output map within said image cache.

**Patentansprüche**

1. Convolutional-Neural-Network-CNN-Modul (30) für ein Bildverarbeitungssystem, das umfasst:

einen Bildzwischenspeicher (31), der einen Eingabeport (din) und einen Ausgabeport (dout) umfasst, wobei der Bildzwischenspeicher auf eine Anforderung zum Lesen eines Blocks von N-x-M-Pixeln reagiert, der sich von einem bestimmten Ort innerhalb einer Eingabekarte erstreckt, um den Block von N-x-M-Pixeln an dem Ausgabeport bereitzustellen;

ein Faltungsmodul (32), das ausgelegt ist, um Gewichte für jede Schicht der Faltungsverarbeitung aus einem Gewichtzwischenspeicher (37) zu lesen, wobei der Satz von Gewichten einer gegebenen Schicht eines gegebenen CNN zugeordnet ist und während einer Trainingsphase des CNN vorberechnet wird, und um mindestens einen Block von N-x-M-Pixeln aus dem Bildzwischenspeicher-Ausgabeport zu lesen, um den mindestens einen Block von N-x-M-Pixeln mit einem entsprechenden Satz von Gewichten zu kombinieren, so dass ein Produkt bereitgestellt wird, und um das Produkt einer Aktivierungsfunktion zu unterziehen, so dass ein Ausgabepixelwert bereitgestellt wird;

wobei der Bildzwischenspeicher konfiguriert ist, um Ausgabepixelwerte über den Bildzwischenspeicher-Eingabeport an eine bestimmte Schreibadresse zu schreiben;

wobei der Bildzwischenspeicher mehrere verschachtelte Speicher (SRAMO ... SRAM3) umfasst, wobei jeder Speicher einen Block von Pixelwerten an einer gegebenen Speicheradresse speichert, wobei der Bildzwischenspeicher ausgelegt ist, um zu bestimmen, dass ein Block von N-x-M-Pixeln aus dem Bildzwischenspeicher gelesen werden soll: eine jeweilige Adresse (Addr0 ... Addr3) in jedem der verschachtelten Speicher, in dem die Pixel des Blocks von N-x-M-Pixeln gespeichert sind; einen jeweiligen Speicher der mehreren verschachtelten Speicher, in dem jedes Pixel des Blocks von N-x-M-Pixeln gespeichert ist; und einen jeweiligen Versatz für jedes Pixel des Blocks von N-x-M-Pixeln innerhalb jeder Speicheradresse, so dass der Bildzwischenspeicher die N-x-M-Pixel gleichzeitig an dem Ausgabeport in einem einzelnen Taktzyklus bereitstellen kann; und

eine Steuerung (60), die ausgelegt ist, um dem Faltungsmodul einen Satz von Gewichten bereitzustellen, bevor mindestens eine Eingabekarte verarbeitet wird, um zu bewirken, dass das Faltungsmodul die mindestens eine Eingabekarte verarbeitet, indem sie Orte für aufeinanderfolgende Blöcke von N-x-M-Pixeln spezifiziert und eine Ausgabekarte in dem Bildzwischenspeicher durch Schreiben der Ausgabepixelwerte an aufeinanderfolgende Orte in dem Bildzwischenspeicher erzeugt.

2. CNN-Modul nach Anspruch 1, ferner umfassend einen Unterabtaster (34), der ausgelegt ist, um Ausgabepixelwerte von dem Faltungsmodul selektiv unterabzutasten und Ausgabepixelwerte an einer Datenausgabeschnittstelle bereitzustellen, wobei der Bildzwischenspeicher konfiguriert ist, um Ausgabepixelwerte von der Unterabtaster-Datenausgabeschnittstelle in eine spezifizierte Schreibadresse über den Bildzwischenspeicher-Eingabeport zu schreiben.

3. CNN-Modul nach Anspruch 1, ferner umfassend eine Lesesteuerung (36), die ausgelegt ist, um Bildinformationen über einen Systembus zu erfassen, wobei die Lesesteuerung so ausgelegt ist, dass sie eine Datenausgabeschnittstelle bereitstellt, um mindestens ein Pixel bereitzustellen, das in eine spezifizierte Schreibadresse in dem Bildzwischenspeicher geschrieben werden soll; und eine Schreibsteuerung (39), die ausgelegt ist, um Bildzwischenspeicherdaten über einen Systembus bereitzustellen, wobei die Schreibsteuerung ausgelegt ist, um eine Dateneingabeschnittstelle bereitzustellen, um mindestens ein Pixel zu empfangen, das aus einer spezifizierten Adresse in dem Bildzwischenspeicher gelesen werden soll.

4. CNN-Modul nach Anspruch 1, umfassend A verschachtelte Speicher, und wobei an jeder Speicheradresse benachbarte A-x-A-Pixel für eine Karte gespeichert werden können.

5. CNN-Modul nach Anspruch 4, wobei, wenn $N \leq A + 1$ und $M \leq A + 1$ ist, die Steuerung ausgelegt ist, um an jedem Ort innerhalb einer Karte frei auf einen Block von N-x-M-Pixeln zuzugreifen.

6. CNN-Modul nach Anspruch 4, wobei A = 4; und vorzugsweise, wenn M = N = 6, die Steuerung ausgelegt ist, um auf Blöcke von N-x-M-Pixeln an geradzahligen Orten innerhalb einer Karte zuzugreifen; oder wenn $6 < M \leq 8$ und $6 < N \leq 8$ ist, die Steuerung ausgelegt ist, um nur an jedem vierten Ort innerhalb einer Karte auf Blöcke von N-x-M-Pixeln zuzugreifen.

7. CNN-Modul nach Anspruch 1, wobei die Steuerung ausgelegt ist, um Pixel aus mehreren Ausgabekarten in einen einzelnen Vektor von 1-x-W-Zellen zu verketten, und wobei das Faltungsmodul ausgelegt ist, um Vektorzellen mit einem entsprechenden Satz von Gewichten zu kombinieren, so dass ein Produkt bereitgestellt wird, und um das Produkt einer Aktivierungsfunktion zu unterziehen, so dass ein Ausgabevektorzellenwert bereitgestellt wird.

8. CNN-Modul nach Anspruch 1, wobei die Steuerung ausgelegt ist, um entweder:

Ausgabekarten an verschiedenen Speicherorten als Eingabekarten in den Bildzwischenspeicher zu schreiben, die verwendet werden, um die Ausgabekarten zu erzeugen;

oder um Eingabekarten in dem Bildzwischenspeicher mit Ausgabekarten aus aufeinanderfolgenden Faltungsschichten zu überschreiben.

9. CNN-Modul nach Anspruch 1, wobei der Bildzwischenspeicher einen Zwischenspeicher-Steuerblock (62) umfasst, und wobei der Zwischenspeicher-Steuerblock ausgelegt ist, um für jeden Block von N-x-M-Pixeln, auf den in dem Bildzwischenspeicher zugegriffen werden soll, wenn $M \leq 8$ und $N \leq 8$, eine 8-x-8-MS-Matrix zu berechnen, wobei jede Zelle einen jeweiligen Speicher der mehreren verschachtelten Speicher anzeigt, in denen jedes Pixel des Blocks von N-x-M-Pixeln gespeichert ist; um eine 8-x-8-BS-Matrix zu berechnen, wobei jede Zelle einen jeweiligen Versatz für jedes Pixel des Blocks von N-x-M-Pixeln innerhalb jeder Speicheradresse anzeigt; um die MS- und BS-Matrizen zu kombinieren und die Kombination gemäß der Größe des Blocks von N-x-M-Pixeln zu maskieren, um ein jeweiliges Bytefreigabesignal (BE0 ... BE3) für jeden verschachtelten Speicher des Bildzwischenspeichers zu erzeugen.

10. CNN-Modul nach Anspruch 9, wobei entweder: die MS-Matrix unter Verwendung einer Kombination von Summen und Vergleichen berechnet wird; oder die BS-Matrix unter Verwendung einer Kombination von Verschiebungen und einer One-Hot-Funktion berechnet wird.

11. CNN-Modul nach Anspruch 1, ferner umfassend eine Lesesteuerung (38), die ausgelegt ist, um die Gewichte für jede Schicht der Faltungsverarbeitung über einen Systembus in den Gewichtzwischenspeicher zu lesen, wobei der Gewichtzwischenspeicher jeweils mehrere verschachtelte Speicher umfasst, wobei jeder Speicher einen Block von Gewichten an einer gegebenen Speicheradresse speichert, wobei der Gewichtzwischenspeicher ausgelegt ist, um zu bestimmen, dass ein Block von N-x-M-Gewichten aus dem Gewichtzwischenspeicher gelesen werden soll: eine jeweilige Adresse in jedem der verschachtelten Speicher, in dem die Gewichte des Blocks von N-x-M-Gewichten gespeichert sind; einen jeweiligen Speicher der mehreren verschachtelten Speicher, in dem jedes Gewicht des Blocks von N-x-M-Gewichten gespeichert ist; und einen jeweiligen Versatz für jedes Gewicht des Blocks des N-x-M-Gewichts innerhalb jeder Speicheradresse, so dass der Gewichtzwischenspeicher die N-x-M-Gewichte gleichzeitig an einem Ausgabeport in einem einzelnen Taktzyklus bereitstellen kann.

12. CNN-Modul nach Anspruch 1, ferner umfassend eine Lesesteuerung (36) für den Bildzwischenspeicher, wobei die Lesesteuerung ausgelegt ist, um gleichzeitig einen Block von N-x-M-Pixelwerten an den Bildzwischenspeicher-Eingabeport bereitzustellen, wobei der Bildzwischenspeicher ausgelegt ist, um zu bestimmen, dass der Block von N-x-M-Pixeln in den Bildzwischenspeicher geschrieben werden soll: eine jeweilige Adresse in jedem der verschachtelten Speicher, in der die Pixel des Blocks von N-x-M-Pixeln gespeichert werden sollen; einen jeweiligen Speicher der mehreren verschachtelten Speicher, in dem jedes Pixel des Blocks von N-x-M-Pixeln gespeichert werden soll; und einen jeweiligen Versatz für jedes Pixel des Blocks von N-x-M-Pixeln innerhalb jeder Speicheradresse, so dass der Bildzwischenspeicher die N-x-M-Pixel gleichzeitig an dem Eingabeport in die verschachtelten Speicher schreiben kann.

13. CNN-Modul nach Anspruch 1, wobei die Gewichte als 8-Bit-Gleitkommazahlen mit einer Exponentenvorspannung größer als 7D gespeichert werden, und vorzugsweise wobei die Exponentenvorspannung ungefähr 12D ist.

14. CNN-Modul nach Anspruch 1, wobei die Gewichte Gleitkommazahlen umfassen, wobei die Gewichte in einer kom-primierten Form gesendet und/oder gespeichert werden, wobei Gleitkommawerte von minus null und subnormal vor der Komprimierung genullt werden und positive und negative unendliche Keine-Zahl-Werte gesättigt werden, und wobei die Gewichte unter Verwendung der Lauflängencodierung, RLE, komprimiert werden, wobei Symbole, die für unkomprimierte minus Null, subnormal, unendlich und/oder keine Zahl verwendet werden, eine Anzahl von aufeinanderfolgenden Nullwertgewichten in einer Sequenz codieren.

15. CNN-Modul nach Anspruch 1, wobei der Bildzwischenspeicher ausgelegt ist, um Pixeldaten für mehrere Karten an jeder Speicheradresse zu speichern, so dass aufeinanderfolgende Blöcke von N-x-M-Pixeln für mehreren Karten in einem einzigen Speicherzyklus aus dem Bildzwischenspeicher gelesen werden können, um eine Ausgabekarte in dem Bildzwischenspeicher zu erzeugen.

**Revendications**

1. Moteur de réseau neuronal convolutif, CNN, (30) pour un système de traitement d'image comprenant :

   une mémoire cache d'image (31) comprenant un port d'entrée (din) et un port de sortie (dout), ladite mémoire cache d'image étant sensible à une requête de lecture d'un bloc de pixels NxM s'étendant à partir d'un emplacement spécifié dans une carte d'entrée pour fournir ledit bloc de pixels NxM au niveau dudit port de sortie ;
   un moteur de convolution (32) conçu pour lire des poids de chaque couche de traitement de convolution à partir d'une mémoire cache de poids (37), ledit ensemble de poids étant associé à une couche donnée d'un CNN donné et étant pré-calculé pendant une phase d'entraînement du CNN, et pour lire au moins un bloc de pixels NxM à partir dudit port de sortie de mémoire cache d'image, pour combiner ledit au moins un bloc de pixels NxM à un ensemble correspondant de poids afin de fournir un produit, et pour soumettre ledit produit à une fonction d'activation afin de fournir une valeur de pixel de sortie ;
   ladite mémoire cache d'image étant configurée pour écrire des valeurs de pixels de sortie dans une adresse d'écriture spécifiée par l'intermédiaire dudit port d'entrée de mémoire cache d'image ;
   ladite mémoire cache d'image comprenant une pluralité de mémoires entrelacées (SRAM0...SRAM3), chaque mémoire stockant un bloc de valeurs de pixels à une adresse de mémoire donnée, la mémoire cache d'image étant conçue pour déterminer, pour un bloc de pixels NxM à lire à partir de ladite mémoire cache d'image : une adresse respective (Addr0...Addr3) dans chacune desdites mémoires entrelacées dans laquelle lesdits pixels dudit bloc de pixels NxM sont stockés ; une mémoire respective de ladite pluralité de mémoires entrelacées dans laquelle chaque pixel dudit bloc de pixels NxM est stocké ; et un décalage respectif pour chaque pixel dudit bloc de pixels NxM dans chaque adresse de mémoire, de sorte que ladite mémoire cache d'image puisse fournir simultanément lesdits pixels NxM audit port de sortie en un cycle d'horloge unique ; et
   un dispositif de commande (60) conçu pour fournir un ensemble de poids audit moteur de convolution avant de traiter au moins une carte d'entrée, afin d'amener ledit moteur de convolution à traiter ladite au moins une carte d'entrée en spécifiant des emplacements pour des blocs successifs de pixels NxM, et à générer un carte de sortie dans ladite mémoire cache d'image en écrivant lesdites valeurs de pixels de sortie dans des emplacements successifs dans ladite mémoire cache d'image.

2. Moteur CNN selon la revendication 1, comprenant en outre un sous-échantillonneur (34) conçu pour sous-échantillonner sélectivement les valeurs de pixels de sortie dudit moteur de convolution et pour fournir des valeurs de pixels de sortie à une interface de sortie de données, ladite mémoire cache d'image étant configurée pour écrire des valeurs de pixels de sortie à partir de ladite interface de sortie de données de sous-échantillonneur à une adresse d'écriture spécifiée par l'intermédiaire dudit port d'entrée de mémoire cache d'image.

3. Moteur CNN selon la revendication 1, comprenant en outre un dispositif de commande de lecture (36) conçu pour acquérir des informations d'image à travers un bus de système, le dispositif de commande de lecture étant conçu pour fournir une interface de sortie de données afin de fournir au moins un pixel à écrire à une adresse d'écriture spécifiée dans ladite mémoire cache d'image ; et un dispositif de commande d'écriture (39) conçu pour fournir des données de cache d'image à travers un bus de système, le dispositif de commande d'écriture étant conçu pour fournir une interface d'entrée de données afin de recevoir au moins un pixel à lire à partir d'une adresse spécifiée dans ladite mémoire cache d'image.

4. Moteur CNN selon la revendication 1 comprenant une mémoire entrelacée, et dans lequel, à chaque adresse de mémoire, des pixels adjacents AxA peuvent être stockés pour une carte.

5. Moteur CNN selon la revendication 4, dans lequel, lorsque N ≤A + 1 et M ≤A + 1, ledit dispositif de commande est conçu pour accéder librement à un bloc de pixels NxM à n'importe quel emplacement d'une carte.

6. Moteur CNN selon la revendication 4, dans lequel A = 4 ; et de préférence lorsque M = N = 6, ledit dispositif de commande est conçu pour accéder à des blocs de pixels NxM à des emplacements aux numéros pairs dans une carte ; ou lorsque 6 < M ≤ 8 et 6 < N ≤ 8, ledit dispositif de commande est conçu pour accéder à des blocs de pixels NxM uniquement à chaque quatrième emplacement dans une carte.

7. Moteur CNN selon la revendication 1, dans lequel ledit dispositif de commande est conçu pour concaténer des pixels d'une pluralité de cartes de sortie en un seul vecteur de cellules 1xW, et dans lequel ledit moteur de convolution est conçu pour combiner des cellules vectorielles à un ensemble correspondant de poids afin de fournir un produit, et pour soumettre ledit produit à une fonction d'activation afin de fournir une valeur de cellule vectorielle de sortie.

**8.** Moteur CNN selon la revendication 1, dans lequel ledit dispositif de commande est conçu soit : pour écrire des cartes de sortie dans ladite mémoire cache d'image à différents emplacements de mémoire que ceux des cartes d'entrée utilisées pour générer lesdites cartes de sortie ; soit pour écraser des cartes d'entrée dans ladite mémoire cache d'image avec des cartes de sortie provenant des couches de convolution successives.

**9.** Moteur CNN selon la revendication 1, dans lequel ladite mémoire cache d'image comprend un bloc de commande de mémoire cache (62), et pour chaque bloc de pixels NxM à accéder dans ladite mémoire cache d'image, lorsque M ≤ 8 et N ≤ 8, ledit bloc de commande de mémoire cache est conçu pour calculer une matrice 8x8 (MS) lorsque chaque cellule indique une mémoire respective de ladite pluralité de mémoires entrelacées dans laquelle chaque pixel dudit bloc de pixels NxM est stocké ; pour calculer une matrice 8x8 (BS) lorsque chaque cellule indique un décalage respectif pour chaque pixel dudit bloc de pixels NxM dans chaque adresse de mémoire ; pour combiner lesdites matrices MS et BS et pour masquer ladite combinaison en fonction de la taille dudit bloc de pixels NxM afin de générer un signal de validation d'octet (BE0...BE3) respectif pour chaque mémoire entrelacée de ladite mémoire cache d'image.

**10.** Moteur CNN selon la revendication 9, dans lequel : soit ladite matrice MS est calculée au moyen d'une combinaison de sommes et de comparaisons ; soit ladite matrice BS est calculée au moyen d'une combinaison de décalages et d'une fonction à chaud.

**11.** Moteur CNN selon la revendication 1, comprenant en outre un dispositif de commande de lecture (38) conçu pour lire lesdits poids pour chaque couche de traitement de convolution à travers un bus système dans ladite mémoire cache de poids, ladite mémoire cache de poids comprenant une pluralité de mémoires entrelacées, chaque mémoire stockant un bloc de poids à une adresse de mémoire donnée, la mémoire cache de poids étant conçue pour déterminer, pour un bloc de poids NxM à lire à partir de ladite mémoire cache de poids : une adresse respective dans chacune desdites mémoires entrelacées dans laquelle lesdits poids dudit bloc de poids NxM sont stockés ; une mémoire respective de ladite pluralité de mémoires entrelacées dans laquelle chaque poids dudit bloc de poids NxM est stocké ; et un décalage respectif pour chaque poids dudit bloc de poids NxM dans chaque adresse de mémoire, de sorte que ladite mémoire cache de poids puisse fournir simultanément lesdits poids NxM au niveau d'un port de sortie en un cycle d'horloge unique.

**12.** Moteur CNN selon la revendication 1, comprenant en outre un dispositif de commande de lecture (36) pour ladite mémoire cache d'image, ledit dispositif de commande de lecture étant conçu pour fournir simultanément un bloc de valeurs de pixels NXM au niveau dudit port d'entrée de mémoire cache d'image, la mémoire cache d'image étant conçue pour déterminer, pour ledit bloc de pixels NxM à écrire dans ladite mémoire cache d'image : une adresse respective dans chacune desdites mémoires entrelacées dans lesquelles lesdits pixels dudit bloc de pixels NxM doivent être stockés ; une mémoire respective de ladite pluralité de mémoires entrelacées dans laquelle chaque pixel dudit bloc de pixels NxM doit être stocké ; et un décalage respectif pour chaque pixel dudit bloc de pixels NxM dans chaque adresse de mémoire, de sorte que ladite mémoire cache d'image puisse écrire simultanément lesdits pixels NxM au niveau dudit port d'entrée dans lesdites mémoires entrelacées.

**13.** Moteur CNN selon la revendication 1, dans lequel lesdits poids sont stockés sous forme de nombres à virgule flottante de 8 bits ayant un biais d'exposant supérieur à 7D, et ledit biais d'exposant étant de préférence égal à environ 12D.

**14.** Moteur CNN selon la revendication 1, dans lequel lesdits poids comprennent des nombres à virgule flottante, lesdits poids étant transmis et/ou stockés sous une forme compressée, et, avant la compression, les valeurs à virgule flottante de moins zéro et subnormales étant mises à zéro et les valeurs sans nombre, infinies positives et négatives étant saturées, et lesdits poids étant compressés au moyen d'un codage de longueur de course (RLE), les symboles utilisés pour les valeurs moins zéro non compressées, subnormales, infinies et/ou sans nombre codent un certain nombre de poids consécutifs de valeur zéro dans une séquence.

**15.** Moteur CNN selon la revendication 1, dans lequel ladite mémoire cache d'image est conçue pour stocker des données de pixels pour une pluralité de cartes à chaque adresse de mémoire, de sorte que des blocs successifs de pixels NxM, pour ladite pluralité de cartes, puissent être lus à partir de ladite mémoire cache d'image en un cycle de mémoire unique afin de générer une carte de sortie dans ladite mémoire cache d'image.

## Figure 1 (Prior Art)

Input Map A  Input Map B  Input Map C

Figure 2 (Prior Art)

16

3x3
Convolution
Kernel
18

Dot Product 20  Activation Function 22

Output Map

Figure 3

**CNN Engine** 30

Subsampling 34

3D Convolution Engine 32

NxM

Image Cache 31
dout
din
addr,size

35

Read Control 36

Write Control 39

Weights Cache 37
NxM

Read Control 38

Control 60

System Bus 42

DRAM
Image Data
and Weights 40

CPU 50

## Cache

0x00

Initial ROI

Maps after Convolutional Layer 1

Initial ROI

| Layer 1 Map 0 | Layer 1 Map 1 | Layer 1 Map 2 |
| Layer 1 Map 3 | Layer 1 Map 4 | |

Maps after Convolutional Layer 2

| Layer 2 Map 0 | Layer 2 Map 1 | Layer 2 Map 2 | Layer 2 Map 3 |
| Layer 2 Map 4 | Layer 2 Map 5 | Layer 2 Map 6 | Layer 2 Map 7 |
| Layer 1 Map 0 | Layer 1 Map 1 | Layer 1 Map 2 | Layer 2 Map 8 |
| Layer 1 Map 3 | Layer 1 Map 4 | | Layer 2 Map 9 |

Maps after Convolutional Layer 3

| Layer 2 Map 0 | Layer 2 Map 1 | Layer 2 Map 2 | Layer 2 Map 3 |
| Layer 2 Map 4 | Layer 2 Map 5 | Layer 2 Map 6 | Layer 2 Map 7 |
| | | Layer 2 Map 8 |
| | | Layer 2 Map 9 |

Layer 3 Maps

Figure 4

Figure 5

Image stored in SRAMs

Image

2D Mapping of SRAM addresses

din
up to 8x8 pixels

512

Input Demultiplexer
64 Muxes 64:1

64

MS, BS

128    128         128    128

62

Addr0, BE0

din[127:0]    din[127:0]    din[127:0]    din[127:0]

Addres: (x,y)

Cache Control

Addr1, BE1

Size: (w,h)

Addr2, BE2

SRAM0
256x128

SRAM1
256x128

SRAM2
256x128

SRAM3
256x128

Addr3, BE3

dout[127:0]    dout[127:0]    dout[127:0]    dout[127:0]

128         128         128         128

Figure 6

MS, BS

Output Multiplexer
64 Muxes 64:1

66

512

dout
up to 8x8 pixels

Figure 7

Figure 8

Figure 10

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2015073058 W
- US 62210243
- WO 2014005783 A
- US 2015262344 A
- US 6157751 A
- US 8518774 B
- US 8014195 B
- US 8325515 B
- WO 2008054987 A